# EUROPÄISCHE PATENTSCHRIFT

(11) **EP 3 483 636 B1**
(45) Veröffentlichungstag und Bekanntmachung des Hinweises auf die Patenterteilung: **25.11.2020**
(21) Anmeldenummer: 18180670.4
(22) Anmeldetag: 29.06.2018
(51) Int. Cl.: G01V 8/20

(54) **LICHTVORHANG**
LIGHT CURTAIN
RIDEAU LUMINEUX

(30) Priorität: 08.11.2017 DE 202017106755 U
(43) Veröffentlichungstag der Anmeldung: 15.05.2019
(73) Patentinhaber: Leuze electronic GmbH + Co. KG, 73277 Owen/Teck (DE)
(72) Erfinder: Hartl, Paul, 80797 München (DE)
(74) Vertreter: Ruckh, Rainer Gerhard

(56) Entgegenhaltungen:
- EP-B1- 0 675 376
- DE-A1- 3 939 191
- DE-A1-102010 048 941
- DE-U1-202012 102 549
- US-A- 4 650 990

## Beschreibung

Die Erfindung betrifft einen Lichtvorhang gemäß des Anspruchs 1.

Derartige Lichtvorhänge dienen zur Erfassung von Objekten in einem Überwachungsbereich. Typischerweise umfasst ein derartiger Lichtvorhang eine Sendereinheit mit einer Anordnung von Lichtstrahlen emittierenden Sendern an einem Rand des Überwachungsbereichs und einer Empfängereinheit mit einer Anordnung von Lichtstrahlen empfangenden Empfängern am gegenüberliegenden Rand des Überwachungsbereichs. Jedem Sender ist ein Empfänger zugeordnet, sodass bei freiem Überwachungsbereich dessen Lichtstrahlen ungehindert auf den zugeordneten Empfänger trifft. Bei einem Objekteingriff ist wenigstens einer der Lichtstrahlen unterbrochen. In einer Auswerteeinheit wird in Abhängigkeit der Empfangssignale ein Objektfeststellungssignal generiert, welches angibt, ob im Überwachungsbereich ein Objekt vorhanden ist oder nicht.

Eine wesentliche Anforderung bei der Herstellung der Lichtvorhänge besteht darin, bei hoher Funktionalität des Lichtvorhangs dessen Herstellkosten so gering wie möglich zu halten.

Bei bekannten Lichtvorhängen weist die Sendersteuerung zur Ansteuerung der einzelnen Sender einen unerwünscht hohen Schaltungsaufwand auf. Typischerweise werden die einzelnen Sender zyklisch einzeln nacheinander aktiviert. Für eine optische Synchronisation der Sender und der Empfänger senden die Sender üblicherweise Lichtpulse mit bestimmten Kennungen auf. Zur Einzelaktivierung der Sender werden relativ aufwändige Schaltungen mit UND-Gattern bzw. Schieberegistern benötigt. Weiterhin werden Modulationsschaltungen benötigt, die die Lichtpulse mit den Kennungen erzeugen. Für derartige Schaltungen wird eine Vielzahl von Bauteilen benötigt, was einen hohen konstruktiven Aufwand bedingt. Zwar können einige der vorgenannten Funktionen in integrierten Schaltkreisen wie ASIC implementiert werden, jedoch sind applikationsspezifische Speziallösungen mit derartigen integrierten Schaltkreisen sehr teuer, da diese eine aufwändige Zusatzschaltung erfordern.

Die DE 39 39 191 A1 betrifft eine mehrstrahlige Einweglichtschranke zur berührungslosen Überwachung eines Schutzfeldes mit einem Sender, der eine Reihenanordnung von periodisch und zyklisch nacheinander eingeschalteten Infrarot-Sendedioden aufweist, die moduliertes Licht abstrahlen, einem Empfänger, der eine entsprechende Reihenanordnung von periodisch und zyklisch aktivierten Photodioden aufweist, von denen jede einer der Infrarot-Sendedioden zugeordnet ist und mit eine mehrkanaligen Auswerteeinheit im Empfänger, die ein Signal "Schutzfeld nicht frei" erzeugt, wenn mindesten ein Lichtstrahl vom Sender zum Empfänger unterbrochen ist. Die Infrarot-Sendedioden senden Puls-Pausenmodulierte Impulse mit einer Kennung aus, wobei die Kennung einer ausgewählten Infrarot- Sendediode unterschiedlich gegenüber der Kennung der übrigen Infrarot-Sendedioden ist. Im Sender ist ein Ringschieberegister vorgesehen, durch welches eine einzige logische "1" taktweise hindurchgeschoben wird, wobei nur der Schiebeplatz, der die logische "1" führt, die zugeordnete Infrarot-Sendediode aktiviert.

Die DE 10 2010 048 941 A1 betrifft einen Lichtvorhang, welcher zur Detektion in einem Überwachungsbereich dient und eine Anordnung von Strahlachsen bildenden Sendern und Empfängern aufweist. Die Sender und Empfänger der Strahlachsen sind einzeln oder zu mehreren nacheinander aktivierbar. Die Lichtstrahlen des Senders einer Strahlachse sind bei freiem Überwachungsbereich auf den Empfänger dieser Strahlachse geführt. Mit einer Auswerteeinheit wird in Abhängigkeit der Empfangssignale an den Ausgängen der Empfänger ein Objektfeststellungssignal generiert. Die Sender bilden wenigstens eine Senderkaskade. Die Sender sind mittels einer ersten Ansteuerschaltung ohne strombegrenzenden Widerstand in deren Strompfad direkt einzeln oder zu mehreren aktivierbar. Der Sendestrom wird zentral vorgegeben und ist für die einzelnen Sender individuell anpassbar.

Die US 4,650,990 A betrifft ein prozessgesteuertes Lichtvorhangsystem mit mehreren Master- und Slaveeinheiten, die jeweils mehrere Sender und Empfänger aufweisen. Die Sender werden über einen Ausgang einer Ansteuerschaltung aktiviert.

Der Erfindung liegt die Aufgabe zugrunde, einen Lichtvorhang der eingangs genannten Art bereitzustellen, welcher eine hohe Funktionalität aufweist und zugleich kostengünstig und rationell herstellbar ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Der Lichtvorhang kann nach dem Einweg-Lichtschrankenprinzip arbeiten, so dass die Sender an einem Rand des Überwachungsbereichs und die Empfänger am gegenüberliegenden Rand des Überwachungsbereichs angeordnet sind. Alternativ kann der Lichtvorhang nach dem Reflexionslichtschrankenprinzip arbeiten. In diesem Fall sind die Sender und Empfänger an einem ersten Rand des Überwachungsbereichs angeordnet, wobei am gegenüberliegenden zweiten Rand des Überwachungsbereichs ein Reflektor angeordnet ist.

Bei dem erfindungsgemäßen Lichtvorhang wird eine Senderansteuerung bereitgestellt, welche bei geringem Aufwand eine hohe Funktionalität aufweist.

Die Senderansteuerung weist nur für jeden Sender ein Flip-Flop auf, sowie eine gemeinsame Output-Enable-Leitung, die mit den Ausgangsbeschaltungen der Flip-Flops verbunden ist. Ein wesentlicher Aspekt der Erfindung besteht dabei darin, dass für die Senderansteuerung Flip-Flops mit einer Tristate-Logik verwendet werden.

Die so ausgebildete Senderansteuerung wird von einer Steuereinheit gesteuert, die allgemein von einer Rechnereinheit gebildet ist, wie zum Beispiel einem Microcontroller oder einem ASIC. Für diese Steuerung sind die Eingänge der Flip-Flops und die Output-Enable-Leitung an die Steuereinheit angeschlossen.

Vorteilhaft sind die Ausgangsbeschaltungen jeweils von einer an einen Ausgang des Flip-Flops anschließenden Leitung, einem Verstärker und einem Widerstand gebildet. Die Verstärker sind über eine Output-Enable-Leitung verbunden.

Weiter vorteilhaft ist jeder Sender von einer Leuchtdiode gebildet.

Dabei ist jeder Leuchtdiode ein Treiber in Form eines Halbleiterschalters zugeordnet.

Zweckmäßig ist der Treiber ein Transistor, insbesondere ein MOSFET.

Weitere Komponenten als die vorgenannten sind zur Realisierung der kompletten Senderanordnung nicht notwendig. Die Senderansteuerung wird erfindungsgemäß somit mit einer äußerst geringen Anzahl von Bauteilen realisiert, wodurch sich ein kostengünstiger, kompakter Aufbau der Sendersteuerung ergibt.

Mit den Flip-Flops können die einzelnen Sender, das heißt Leuchtdioden adressiert werden, wodurch vorgegeben wird, welche Sender zu welchen Zeitpunkten aktiviert werden. Die Aktivierung erfolgt zweckmäßig dadurch, dass das jeweilige Flip-Flop so gesetzt wird, dass dessen Ausgang den Zustand High aufweist.

Besonders vorteilhaft ist jedes Flip-Flop ein flankengesteuertes Flip-Flop.

Die Adressierung erfolgt dann mit einer steigenden Flanke eines Clock-Signals, das an einen Eingang des Flip-Flops angelegt wird.

Durch diese Adressierung kann die Reihenfolge der Aktivierung der Sender vorgegeben werden, wobei generell auch einige oder sogar alle Sender gleichzeitig aktiviert werden können.

Die physikalische, örtliche Anordnung der Sender muss dabei nicht der Anordnung der Flip-Flops in der Schaltungsanordnung der Senderansteuerung entsprechen.

Durch diese Adressierung ist somit ein flexibler Senderbetrieb gewährleistet, wobei die Senderaktivierung applikationsspezifisch oder sogar während des Betriebs des Lichtvorhangs abhängig von sich ändernden Randbedingungen geändert werden kann.

Ein wesentlicher Aspekt der Erfindung besteht darin, dass Flip-Flops mit einer Tristate-Logik verwendet werden, die neben den Ausgangssignalen High und Low auch das Ausgangssignal Hochohmig einnehmen können.

Zur Ansteuerung eines Senders wird das zugeordnete, zuvor adressierte Flip-Flop in den Zustand niederohmig geschaltet. Das niederohmige Ausgangssignal wird mittels eines Modulationssignals auf der Output-Enable-Leitung moduliert. Entsprechend dieser Modulation sendet dann der Sender Lichtpulse aus.

Vorteilhaft hierbei ist, dass durch die Vorgabe der Modulationen den Lichtpulsen der einzelnen Sender unterschiedliche Kennungen aufgeprägt werden. Dadurch sind die Lichtpulse der einzelnen Sender voneinander unterscheidbar und können so für eine optische Synchronisierung der Sender und Empfänger des Lichtvorhangs verwendet werden.

Ein weiterer wesentlicher Aspekt besteht darin, dass ein Modulationssignal über den Output-Enable-Eingang nur dann einem Sender und dem folgenden Flip-Flop zuführbar ist, wenn der Ausgang des Flip-Flops niederohmig ist.

Mit dem Modulationssignal der Output-Enable-Leitung und dessen Ausgangssignal des Flip-Flops kann damit gezielt der Senderbetrieb gesteuert werden.

Erfindungsgemäß bilden Modulationssignale Steuersignale, mittels derer Informationen eines Flip-Flops zu wenigstens einem weiteren Flip-Flop weitergebbar sind.

Dabei sind die die Steuersignale bildenden Modulationssignale durch eine Flanke eines Clocksignals des jeweiligen Flip-Flops generiert und einem Eingang eines folgenden Flip-Flops zugeführt.

Durch die so ausgebildete Weitergabe von Flip-Flop-Informationen von einem Flip-Flop zu einem weiteren, können ohne aufwändige Schaltungen wie UND-Gatter die Sender in einer einfachen Logikschaltung gezielt nacheinander aktiviert werden.

Da die die Sender bildenden Leuchtdioden deutlich langsamer schalten als die zugeordneten Flip-Flops, kann durch die Dauer des Modulationssignals vorgegeben werden, ob abhängig vom Modulationssignal die jeweilige Leuchtdiode Licht emittiert oder nicht.

Die Funktionalität der erfindungsgemäßen Senderansteuerung ist vorteilhaft dadurch erhöht, dass Mittel für eine Stromregelung der Sender vorgesehen sein können.

Dabei können Mittel zur Messung der durch die die Sender bildenden Leuchtdioden fließenden Ströme vorgesehen sein. In Abhängigkeit der so gemessenen Ströme kann eine Stromregelung durchgeführt werden.

Die Erfindung wird im Folgenden anhand der Zeichnungen erläutert. Es zeigen:
- Figur 1:: Schematische Darstellung eines Lichtvorhangs.
- Figur 2:: Detaildarstellung eines Ausschnitts der Senderansteuerung für den Lichtvorhang gemäß Figur 1.
- Figur 3:: Zeitdiagramme für Signale der Anordnung gemäß Figur 2.

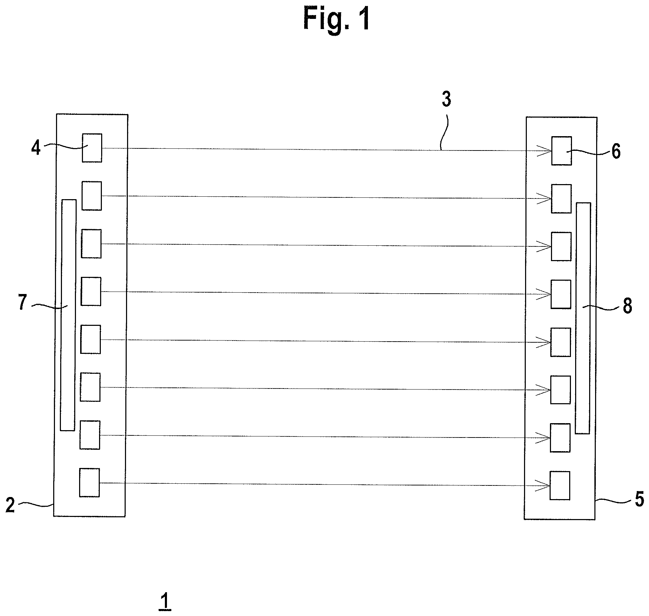

Figur 1 zeigt den prinzipiellen Aufbau eines Ausführungsbeispiels des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 angeordnet ist. Der Lichtvorhang 1 weist weiterhin eine Empfängereinheit 5 auf, in deren Gehäuse eine Reihenanordnung von Lichtstrahlen 3 empfangenden Empfängern 6 ist. Die Empfänger 6 sind beispielsweise von Foto-PIN-Dioden oder Foto-Dioden gebildet. Alternativ können auch Foto-Transistoren eingesetzt werden.

Die Sendereinheit 2 und die Empfangseinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Senderansteuerung 7 in der Sendereinheit 2 gesteuert. Der Empfängerbetrieb wird durch eine Auswerteeinheit 8 in der Empfängereinheit 5 gesteuert und bewertet. Die Sender 4 und Empfänger 6 der einzelnen Strahlachsen werden durch eine optische oder leitungsgeführte Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufender Überwachungsbereich überwacht.

In der Auswerteeinheit 8 werden hierzu die Empfangssignale der Empfänger 6 ausgewertet, um als Objektfeststellungssignal ein binäres Schaltsignal zu erzeugen. Der erste Schaltzustand entspricht einer Objektmeldung, der zweite Schaltzustand einem freien Überwachungsbereich.

Der Lichtvorhang 1 bildet zweckmäßig einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

Im vorliegenden Ausführungsbeispiel umfasst der Lichtvorhang 1 acht Sender 4 und Empfänger 6. Natürlich kann der Lichtvorhang 1 auch eine andere Anzahl von Sendern 4 und Empfängern 6 aufweisen. Prinzipiell kann der Lichtvorhang 1 auch als Reflexionslichtvorhang ausgebildet sein. In diesem Fall sind die Sender 4 und Empfänger 6 an einem ersten Rand des Überwachungsbereichs angeordnet. Am gegenüberliegenden Rand des Überwachungsbereichs befindet sich ein Reflektor. Bei freiem Überwachungsbereich werden die Lichtstrahlen 3 eines Senders 4 durch den Überwachungsbereich geführt, werden dann am Reflektor reflektiert und werden ein zweites Mal durch den Überwachungsbereich geführt, bevor sie auf den zugeordneten Empfänger 6 treffen.

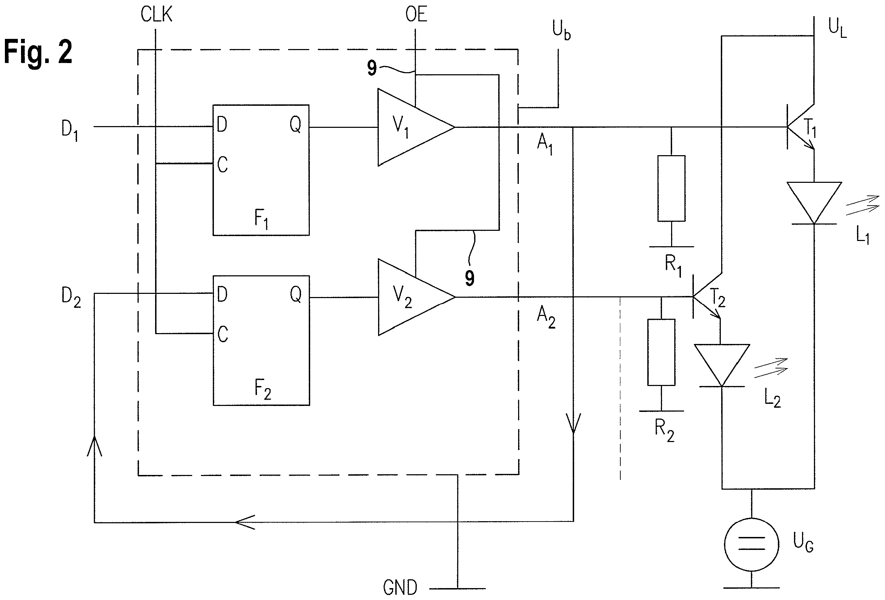

Figur 2 zeigt einen Ausschnitt der Senderansteuerung 7 des Lichtvorhangs 1 gemäß Figur 1. Dabei sind in Figur 2 die Komponenten zur Ansteuerung zweier Sender 4 in Form von Leuchtdioden L₁, L₂ dargestellt. Die gesamte Senderanordnung ist eine Erweiterung der Anordnung von Figur 1 auf acht Sender 4, wobei die den acht Sendern 4 zugeordneten Komponenten immer gleich sind.

Wie Figur 2 zeigt, ist jeder Leuchtdiode L₁, L₂ ein Treiber in Form eines Transistors T₁, T₂ zugeordnet. Die Leuchtdioden L₁, L₂ mit den Transistoren T₁, T₂ liegen zwischen einer Versorgungsspannung U_{L} und einer Spannung U_{G}. Je nach Ausführungsform kann die Versorgungsspannung U_{L} oder die Spannung U_{G} gesteuert werden.

Jeder Leuchtdiode L₁, L₂ ist ein flankengesteuertes Flip-Flop F₁, F₂ mit einer Tristate-Logik zugeordnet. An dem Ausgang Q eines Flip-Flops F₁, F₂ schließt eine Ausgangsbeschaltung mit einem Verstärker V₁, V₂ und einem Widerstand R₁, R₂ an. Die Flip-Flops F₁, F₂ und die Verstärker V₁, V₂ liegen zwischen einer Versorgungsspannung U_{b} und einen Massepotential GND. Die Ausgänge A₁, A₂ der Ausgangssignale sind der jeweiligen Leuchtdiode L₁, L₂ über den Transistor T₁, T₂ zugeführt.

U_{G} ist gleichzeitig auch die Steuerspannung für die Transistoren T₁, T₂, die vorzugsweise als MOSFET ausgeführt sind. Damit lässt sich die Lichtintensität beeinflussen bzw. steuern. R₁, R₂ dienen bei hochohmigem Ausgangszustand von A₁, A₂ als Entladungswiderstände für T₁, T₂, insbesondere, wenn diese als MOSFET ausgeführt sind.

Den Eingängen C der Flip-Flops F₁, F₂ ist von einer nicht dargestellten Steuereinheit ein Clock-Signal CLK zugeführt. Dem ersten Flip-Flop F₁ wird ein Eingangssignal D₁ auf einen Eingang D zugeführt. Das Signal am Ausgang A₁ des ersten Flip-Flops F₁ ist als Eingangssignal D₂ dem Eingang D des zweiten Flip-Flops F₂ zugeführt.

Weiterhin ist ein an die Steuereinheit angeschlossener Output-Enable-Eingang OE vorgesehen. An den Output-Enable-Eingang OE schließt eine Output-Enable-Leitung 9 an, die zu den Verstärkern V₁, V₂ der Flip-Flops F₁, F₂ geführt ist.

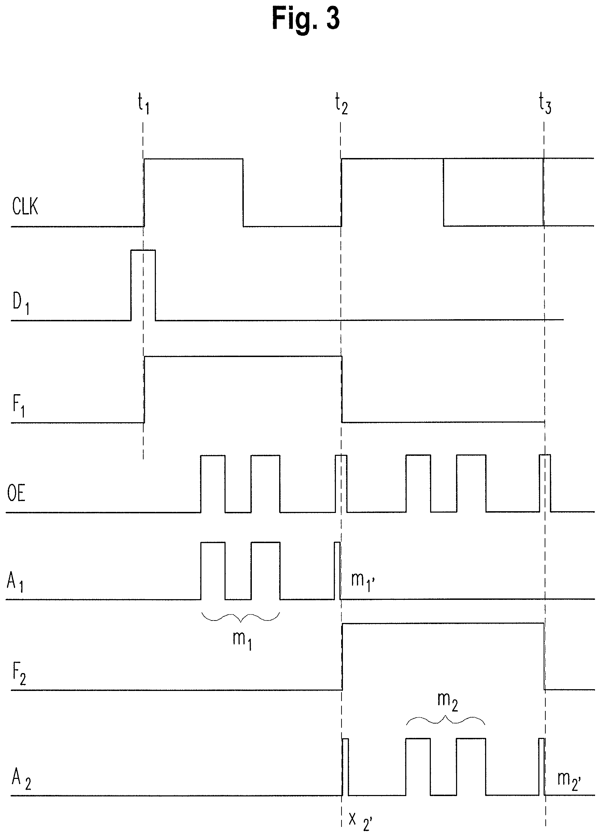

Die Funktionsweise der von der Steuereinheit gesteuerten Senderansteuerung gemäß Figur 2 wird im Folgenden anhand der Zeitdiagramme von Figur 3 erläutert.

Am Eingang D des ersten Flip-Flops F₁ wird von der Steuereinheit ein Signal mit dem Signalwert 1 (High) eingespeist (D1) und mit der steigenden Flanke des Clock-Signals CLK wird zum Zeitpunkt t₁ das Flip-Flop F₁ gesetzt und damit adressiert. Das gespeicherte Ausgangssignal am Ausgang Q des Flip-Flops F₁ steht am Verstärker V₁ zur Weiterverarbeitung an. Mittels des Output-Enable-Eingangs OE wird am Ausgang A₁ des Verstärkers V₁ ein Signal generiert, das vom hochohmigen Zustand in den niederohmigen Zustand geschalten wird. In diesem niederohmigen Signalzustand kann mittels eines Modulationssignals m₁, das am Output-Enable-Eingang OE angelegt wird, am Ausgang A₁ über den Transistor T₁ die zugeordnete Leuchtdiode L₁ angesteuert werden. Dieses Modulationssignal m₁ weist eine Dauer auf, die so groß ist, dass durch dieses Modulationssignal m₁ die Leuchtdiode L₁ Lichtpulse aussendet. Durch die spezifische Form des Modulationssiganls m₁ kann vorgegeben werden, welche Form beziehungsweise Folge von Lichtpulsen von der Leuchtdiode L₁ ermittiert werden.

Nachdem auf diese Weise die erste Leuchtdiode L₁ aktiviert wurde, wird zum Zeitpunkt t₂ mit der steigenden Flanke des Clock-Signals CLK das zweite Flip-Flop F₂ adressiert. Die steigende Flanke des Clock-Signals ist dabei mit dem Output-Enable-Signal am Eingang OE verknüpft bzw. gekoppelt. Durch ein Modulationssignal m₁', das zu diesem Zeitpunkt t₂ am Ausgang A₁ aufliegt, wird die Information des Flip-Flops F₁ an das zweite Flip-Flop F₂ übertragen, in dem die Signale am Ausgang A₁, als Eingangssignale D₁ auf den Eingang D des Flip-Flop F₂ geführt werden. Diese Weitergabe von Informationen des Flip-Flop F₁ zum Flip-Flop F₂ ist deshalb möglich, da sich über die Signale am Output-Enable-Eingang OE der Ausgang A₁ im niederohmigen Zustand befindet und somit die gespeicherte Information des Flip-Flops F₁ über den Verstärker V₁ an den Ausgang A₁ leitet. Das Modulationssignal m₁' bildet somit ein Steuersignal, das mit dem Clock-Signal CLK für eine Weiterleitung von Informationen von einem Flip-Flop F₁ zum nächsten Flip-Flop F₂ bewirkt. Mit diesem Modulationssignal m₁ als Steuersignal, welches in der Auswerteeinheit 8 im Empfangsteil nicht bewertet wird, wird vor der positiven Flanke des Clock-Signals und vor dem Zeitpunkt t₂ an der Leuchtdiode L₁ Licht emittiert. In der restlichen Zeit des Steuersignals X₂ wird nach dem Zeitpunkt t₂ dann die folgende Leuchtdiode L₂ entsprechend Licht emittieren, da hier das Flip-Flop F₂ bereits adressiert ist. Bei dieser zeitlichen Aufteilung des Steuersignals durch die positive Flanke des Clock-Signals entstehen auf dem angewählten und dem folgenden Lichtstrahl 3 Pseudolichtimpulse, was die Auswerteeinheit 8 zusätzlich belastet.

Um dies zu vermeiden kann dabei das Modulationssignal m₁ Inhalt der Dateninformation sein, so dass keine steuerungsbedingten Pseudolichtimpulse emittiert werden, sondern nur Lichtimpulse gesendet werden, die von der Auswerteeinheit 8 im Empfangsteil bewertet werden. Dies wird erreicht, indem das Modulationssignal m₁ vergrößert wird und zweckmäßigerweise zeitlich an Modulationssignal m₁ angeglichen wird. Gleichzeitig ist der verbleibende Teil X₂ des Modulationssignals m₁ nach dem Clock-Signal CLK ab dem Zeitpunkt t₂ so kurz gewählt, dass das folgende Flip-Flop F₂ die Information am Ausgang A₁ noch sicher am Eingang D übernehmen kann. Diese gewählte kurze Restzeit von X₂ reicht nicht aus, um über das bereits adressierte Flip-Flop F₂ und dem Verstärker V₂ über den Ausgang A₂ mit dem Transistor T₂ die Leuchtdiode L₂ zum Aussenden von Licht zu bringen. Diese Methode ist nur möglich, da der Transistor T₂ und die Leuchtdiode L₂ wesentlich langsamer sind als das Flip-Flop F₂ mit Verstärker V₂. Diese beschriebene Funktionsweise ist auf alle Lichtstrahlen 3 mit den baugleichen Sendern 4 übertragbar.

Eine weitere Methode ist, die Dauer des Modulationssignals m₁' als Steuersignal so kurz zu halten, dass durch diese die trägere Leuchtdiode L₂ über den Transistor T₁ nicht aktiviert wird, so dass das Modulationssignal m₁' keine Aussendung eines Pseudolichtpulses bewirkt. Nach der positiven Flanke des Clock-Signals zum Zeitpunkt t₂, verbleibt eine restliche Zeit des Modulationssignals X₂ auf dem folgenden Lichtstrahl 3, angewählt durch Flip-Flop F₂. Ist diese Zeit von X₂' so kurz gewählt, dass über den Transistor T₂ und der relativ langsamen Leuchtdiode L₂ kein Lichtimpuls emittiert wird, so ist das Modulationssignal, bestehend aus m₁' und X₂', ein reines Steuersignal zum Lichtstrahlwechsel ohne Bewertung durch die Auswerteeinheit 8.

Anders verhält es sich, wenn man nur die Zeit für X₂' verlängert, zweckmäßigerweise wie die Impulsdauer des Modulationssignals m₂. In diesem Fall kann das verlängerte Modulationssignal X₂' über den Transistor T₂ und die Leuchtdiode L₂ einen aktiven Lichtimpuls emittieren. Dieser kann bereits als aktiver Inhalt der übertragenen Information des Modulationssignals m₂ sein und von der Auswerteeinheit 8 des Empfangsteils bewertet werden.

Nachdem das Flip-Flop F₂ adressiert ist, wird durch ein am Output-Enable-Eingang OE generiertes und dem Ausgang A₂ zugeführtes Modulationssignal m₂ die Leuchtdiode L₂ aktiviert, sodass diese Lichtpulse emittiert.

Den Leuchtdioden L₁, L₂, ... können durch unterschiedliche Modulationssignale m₁, m₂, ... unterschiedliche Kennungen aufgeprägt werden. Dadurch sind die Lichtpulse der einzelnen Sender 4 voneinander unterscheidbar und können für die optische Synchronisation und/oder zur Bildung und Trennung von optischen Übertragungskanälen der Lichtvorhänge verwendet werden.

Nach der Aktivierung der zweiten Leuchtdiode L₂ können mit weiteren Modulationssignalen mₙ in Verbindung mit der steigenden Flanke des Clock-Signals CLK zum Zeitpunkt t₃ die Informationen des Flip-Flops F₂ an das nächste (in Figur 2 nicht mehr dargestellte) Flip-Flop Fₙ übertragen werden, so dass diese nach deren Adressierung über die Modulationssignale mₙ am Output-Enable-Eingang OE zur Aussendung von Lichtpulsen aktiviert werden.

Die Erfindung ist nicht auf das gezeigte Ausführungsbeispiel beschränkt. Beispielsweise können die Transistoren T₁, T₂, ...auch als MOSFET ausgebildet sein. Auch können anstelle von NPN-Transistoren auch PNP-Transistoren verwendet werden, wobei sich dann eine inverse Logikstruktur ergibt.

### Bezugszeichenliste

- (1): Lichtvorhang
- (2): Sendereinheit
- (3): Lichtstrahl
- (4): Sender
- (5): Empfängereinheit
- (6): Empfänger
- (7): Sendeansteuerung
- (8): Auswerteeinheit
- (9): Output-Enable-Leitung

- OE: Output-Enable-Eingang
- V₁: Verstärker
- V₂: Verstärker
- F₁: Flip-Flop
- F₂: Flip-Flop
- L₁: Leuchtdiode
- L₂: Leuchtdiode
- T₁: Transistor
- T₂: Transistor
- U_{L}: Versorgungsspannung
- U_{b}: Versorgungsspannung
- U_{G}: Spannung
- Q: Ausgang
- R₁: Widerstand
- R₂: Widerstand
- A₁: Ausgang
- A₂: Ausgang
- CLK: Clock-Signal
- D: Eingang
- D₁: Eingangssignal
- D₂: Eingangssignal
- t₁: Zeitpunkt
- t₂: Zeitpunkt
- t₃: Zeitpunkt
- m₁: Modulationssignal
- m₁': Modulationssignal
- m₂: Modulationssignal
- m₂': Modulationssignal
- GND: Massepotential

## Patentansprüche

1. Lichtvorhang (1) zur Erfassung von Objekten in einem Überwachungsbereich, mit einer Anordnung von Lichtstrahlen (3) emittierenden Sendern (4) und einer Anordnung von Lichtstrahlen (3) empfangenden Empfängern (6), wobei jedem Sender (4) ein Empfänger (6) derart zugeordnet ist, dass bei freiem Überwachungsbereich die Lichtstrahlen (3) des zugeordneten Senders (4) auf diesen Empfänger (6) treffen, und dass bei einem Objekteingriff die Lichtstrahlen (3) wenigstens eines Senders (4) zumindest teilweise unterbrochen sind, und mit einer Auswerteeinheit (8) zur Generierung eines Objektfeststellungssignals in Abhängigkeit von an den Ausgängen der Empfänger (6) anstehenden Empfangssignalen, wobei jedem Sender (4) ein Flip-Flop (F₁, F₂...Fₙ) mit einer Tristate-Logik zugeordnet ist, und dass an die Ausgänge der Flip-Flops (F₁, F₂...Fₙ) anschließende Ausgangsbeschaltungen mit einem Output-Enable-Eingang (OE) verbunden sind, wobei mittels eines Flip-Flops (F₁, F₂...Fₙ) ein Sender (4) adressierbar ist, der Lichtvorhang weiterhin umfassend eine Steuereinheit (7), welche an die Eingänge der Flip-Flops (F₁, F2 ...Fn) und den Output-Enable-Eingang (OE) angeschlossen ist, und wobei ein adressierter Sender (4) dadurch aktiviert ist, dass der Ausgang des zugeordneten Flip-Flops (F₁, F2...Fn) niederohmig geschaltet ist und ein Modulationssignal (m₁, m₂ ...mₙ) am Output-Enable Eingang (OE) angelegt wird, der Lichtvorhang **dadurch gekennzeichnet, dass** die Modulationssignale (m₁, m₂...mₙ) Steuersignale bilden, mittels derer Informationen eines Flip-Flops (F₁, F₂...Fₙ) zu wenigstens einem weiteren Flip-Flop (F₁, F₂...Fₙ) weitergebbar sind, wobei nach einer Flanke eines in der Steuereinheit (7) generierten und dem jeweiligen Flip-Flop (F₁, F₂, ...Fₙ) am Eingang zugeführten Clocksignals die Dauer der die Steuersignale bildenden Modulationssignale (X₂', ...Xₙ') so kurz ist, dass mit diesen keine Lichtpulse generiert werden.

2. Lichtvorhang (1) nach Anspruch 1, **dadurch gekennzeichnet, dass** jedes Flip-Flop (F₁, F₂...Fₙ) ein flankengesteuertes Flip-Flop (F₁, F₂...Fₙ) ist.

3. Lichtvorhang (1) nach einem der Ansprüche 1 oder 2, **dadurch gekennzeichnet, dass** die Ausgangsbeschaltungen jeweils von einer an einen Ausgang des Flip-Flops (F₁, F₂...Fₙ) anschließenden Leitung, einem Verstärker (V₁, V₂...Vₙ) und einem Widerstand (R₁, R₂...Rₙ) gebildet sind, wobei die Verstärker (V₁, V₂...Vₙ) über eine Output-Enable-Leitung 9 mit dem Output-Enable-Eingang (OE) verbunden sind.

4. Lichtvorhang (1) nach einem der Ansprüche 1 - 3, **dadurch gekennzeichnet, dass** eine Steuereinheit (7) vorgesehen ist, an welche die Eingänge der Flip-Flops (F₁, F₂...Fₙ) und der Output-Enable-Eingang (OE) angeschlossen sind.

5. Lichtvorhang (1) nach einem der Ansprüche 1 - 4, **dadurch gekennzeichnet, dass** jeder Sender (4) von einer Leuchtdiode (L₁, L₂...Lₙ) gebildet ist, wobei jeder Leuchtdiode (L₁, L₂...Lₙ) ein Treiber in Form eines Halbleiterschalters zugeordnet ist.

6. Lichtvorhang (1) nach Anspruch 5, **dadurch gekennzeichnet, dass** der Treiber ein Transistor (T₁, T₂...Tₙ), insbesondere ein MOSFET ist.

7. Lichtvorhang (1) nach einem der Ansprüche 1 - 6, **dadurch gekennzeichnet, dass** ein Modulationssignal (m₁, m₂...mₙ) über den Output-Enable-Eingang (OE) nur dann einem Sender (4) und dessen Flip-Flop (F₁, F₂...Fₙ) zuführbar ist, wenn der Ausgang des Flip-Flops (F₁, F₂...Fₙ) niederohmig ist.

8. Lichtvorhang (1) nach einem der Ansprüche 1 - 7, **dadurch gekennzeichnet, dass** ein Sender (4) dann adressiert ist, wenn der Ausgang des zugeordneten Flip-Flops (F₁, F₂...Fₙ) auf High geschaltet ist, wobei insbesondere mehrere Sender (4) gleichzeitig adressierbar sind.

9. Lichtvorhang (1) nach einem der Ansprüche 1 - 8, **dadurch gekennzeichnet, dass** die Modulationssignale (m₁, m₂...mₙ) für die einzelnen Sender (4) zumindest teilweise unterschiedlich ausgebildet sind, wobei insbesondere Lichtpulse von den Modulationssignalen (m₁, m₂...mₙ) abhängige Kennungen aufweisen.

10. Lichtvorhang (1) nach einem der Ansprüche **dadurch gekennzeichnet, dass** die die Steuersignale bildenden Modulationssignale (X₂'... Xₙ') durch eine Flanke eines Clocksignals des jeweiligen Flip-Flops (F₁, F₂...Fₙ) generiert sind, und/oder dass die die Steuersignale bildenden Modulationssignale (X2', ...Xn') einem Eingang (D) des weiteren Flip-Flops (F₁, F₂...Fₙ) zugeführt sind.

11. Lichtvorhang (1) nach einem der Ansprüche 1 - 8, **dadurch gekennzeichnet, dass** Mittel für eine Stromregelung der Sender (4) vorgesehen sind, wobei insbesondere Mittel zur Messung der durch die die Sender (4) bildenden Leuchtdioden (L₁, L₂...Lₙ) fließenden Ströme vorgesehen sind, und dass in Abhängigkeit der so gemessenen Ströme die Stromregelung durchgeführt ist.

## Claims

1. Light curtain (1) for detecting objects in a monitored area, having an arrangement of transmitters (4) emitting light beams (3) and an arrangement of receivers (6) receiving light beams (3), each transmitter (4) being assigned a receiver (6) in such a way that when the monitored area is free, the light beams (3) of the assigned transmitter (4) strike this receiver (6), and in that, in the event of object intervention, the light beams (3) of at least one transmitter (4) are at least partially interrupted, and having an evaluation unit (8) for generating an object detection signal as a function of received signals present at the outputs of the receivers (6),
wherein each transmitter (4) has a flip-flop (F₁, F₂...Fₙ) with a tristate logic is assigned to each transmitter (4), and in that output circuits connected to the outputs of the flip-flops (F₁, F₂...Fₙ) are connected to an output enable input (OE), a transmitter (4) being addressable by means of a flip-flop (F₁, F₂...Fₙ), the light curtain further comprising a control unit (7) which is connected to the inputs of the flip-flops (F₁, F₂...Fₙ) and to the outputs of the flip-flops (F₁, F₂...Fₙ) and the output enable input (OE), and
wherein an addressed transmitter (4) is activated by switching the output of the associated flip-flop (F₁, F₂...Fₙ) to low impedance and applying a modulation signal (m₁, m₂ ...mₙ) is applied to the output enable input (OE), the light curtain **characterised in that** the modulation signals (m₁, m₂ ...mₙ) form control signals by means of which information from one flip-flop (F₁, F₂...Fₙ) is converted into at least one further flip-flop (F₁, F₂...Fₙ), wherein after an edge of a clock signal generated in the control unit (7) and supplied to the respective flip-flop (F₁, F₂...Fₙ) at the input, the duration of the modulation signals (X₂', ...Xn') forming the control signals is so short that no light pulses are generated with these.

2. The light curtain (1) according to claim 1, **characterised in that** each flip-flop (F₁, F₂...Fₙ) is an edge-controlled flip-flop (F₁, F₂...Fₙ).

3. The light curtain (1) according to one of claims 1 or 2, **characterised in that** the output circuits are each formed by a line connected to an output of the flip-flop (F₁, F₂...Fₙ), an amplifier (V₁, V₂, ... Vₙ) and a resistor (R₁, R₂, ... Rn), the amplifiers (V₁, V₂, ... Vₙ) being connected to the output enable input (OE) via an output enable line 9.

4. The light curtain (1) according to one of claims 1 to 3, **characterised in that** a control unit (7) is provided to which the inputs of the flip-flops (F₁, F₂...Fₙ) and the output enable input (OE) are connected.

5. The light curtain (1) according to one of claims 1 to 4, **characterised in that** each emitter (4) is formed by a light emitting diode (L₁, L₂, ... Lₙ), a driver in the form of a semiconductor switch being associated with each light emitting diode (L₁, L₂, ... Lₙ).

6. The light curtain (1) according to claim 5, **characterised in that** the triangle via a transistor (T₁, T₂, ...Tₙ), in particular a MOSFET

7. The light curtain (1) according to one of the claims 1 to 6, **characterised in that** a modulation signal (m₁, m₂ ...mₙ) can only be supplied via the output enable input (OE) to a transmitter (4) and its flip-flop (F₁, F₂...Fₙ) if the output of the flip-flop (F₁, F₂...Fₙ) is low impedance.

8. The light curtain (1) according to one of claims 1 to 7, **characterised in that** a transmitter (4) is addressed when the output of the associated flip-flop (F₁, F₂...Fₙ) is switched to high, in particular several transmitters (4) being addressable simultaneously.

9. The Light curtain (1) according to one of the claims 1 to 8, **characterised in that** the modulation signals (mi, m₂ ...mₙ) for the individual transmitters (4) are at least partially different, light pulses in particular having identifiers dependent on the modulation signals (m₁, m₂ ...mn).

10. The light curtain (1) according to one of claims 1 to 8, **characterised in that** the modulation signals (X₂', ...Xₙ') forming the control signals are generated by an edge of a clock signal of the respective flip-flop (F₁, F₂...Fₙ), and/or **in that** the modulation signals (X₂', ...Xₙ') forming the control signals are fed to an input (D) of the further flip-flop (F₁, F₂...Fₙ).

11. The light curtain (1) according to one of the claims 1 to 8, **characterised in that** means are provided for a current regulation of the transmitters (4), in particular means being provided for measuring the currents flowing through the light-emitting diodes (L₁, L₂...Lₙ) forming the transmitters (4), and **in that** the current regulation is carried out as a function of the currents thus measured.

## Revendications

1. Rideau lumineux (1) pour la détection d'objets dans une zone surveillée, comportant un agencement d'émetteurs (4) émettant des rayons lumineux (3) et un agencement de récepteurs (6) recevant des rayons lumineux (3), un récepteur (6) étant associé à chaque émetteur (4) de telle sorte que, lorsque la zone surveillée est libre, les faisceaux lumineux (3) de l'émetteur (4) associé frappent ce récepteur (6), et en ce que, en cas d'intervention sur un objet, les faisceaux lumineux (3) d'au moins un émetteur (4) sont au moins partiellement interrompus, et avec une unité d'évaluation (8) pour générer un signal de détection d'objet en fonction des signaux reçus présents aux sorties des récepteurs (6),
dans lequel chaque émetteur (4) possède une bascule (F₁, F₂...Fₙ) avec une logique à trois états est attribuée à chaque émetteur (4), et en ce que des circuits de sortie connectés aux sorties des bascules (F₁, F₂...Fₙ) sont connectés à une entrée de validation de sortie (OE), un émetteur (4) étant adressable au moyen d'une bascule F₁, F₂...Fₙ), le rideau lumineux comprenant en outre une unité de commande (7) qui est connectée aux entrées des bascules (F₁, F₂...Fₙ) et aux sorties des bascules (F₁, F₂...Fₙ) et à l'entrée de validation de sortie (OE), et
dans lequel un émetteur adressé (4) est activé en commutant la sortie de la bascule associée (F₁, F₂...Fₙ) à basse impédance et en appliquant un signal de modulation (m₁, m₂ ...mₙ) est appliqué à l'entrée de validation de sortie (OE), le rideau lumineux étant **caractérisé en ce que** les signaux de modulation (m₁, m₂ ...mₙ) forment des signaux de commande au moyen desquels les informations provenant d'une bascule (F₁, F₂...Fₙ) est convertie en au moins une autre bascule (F₁, F₂...Fₙ), la durée des signaux de modulation (X₂', ...Xₙ') formant les signaux de commande étant si courte après un front d'un signal d'horloge généré dans l'unité de commande (7) et amené à l'entrée de la bascule respective (F₁, F₂...Fₙ) qu'aucune impulsion lumineuse n'est générée avec ceux-ci.

2. Rideau lumineux (1) selon la revendication 1, **caractérisé en ce que** chaque bascule (F₁, F₂...Fₙ) est une bascule commandée par le bord (F₁, F₂...Fₙ).

3. Rideau lumineux (1) selon l'une des revendications 1 ou 2, **caractérisé en ce que** les circuits de sortie sont chacun formés par une ligne reliée à une sortie de la bascule F₁, F₂...Fₙ), un amplificateur (V₁, V₂, ... Vₙ) et une résistance (R₁, R₂,... Rₙ), les amplificateurs (V₁, V₂, ... Vₙ) étant reliés à l'entrée de validation de sortie (OE) par l'intermédiaire d'une ligne de validation de sortie 9.

4. Rideau lumineux (1) selon l'une des revendications 1 à 3, **caractérisé en ce qu'**il est prévu une unité de commande (7) à laquelle sont connectées les entrées des bascules (F₁, F₂...Fₙ) et l'entrée de validation de sortie (OE).

5. Rideau lumineux (1) selon l'une des revendications 1 à 4, **caractérisé en ce que** chaque émetteur (4) est formé par une diode électroluminescente (L₁, L₂, ... Lₙ), un circuit d'attaque sous la forme d'un commutateur à semi-conducteur étant associé à chaque diode électroluminescente (L₁, L₂, ... Lₙ).

6. Rideau lumineux (1) selon la revendication 5, **caractérisé en ce que** le triangle par l'intermédiaire d'un transistor (T₁, T₂, ...Tₙ), en particulier un MOSFET

7. Rideau lumineux (1) selon l'une des revendications 1 à 6, **caractérisé en ce qu'**un signal de modulation (m₁, m₂ ...mₙ) ne peut être fourni par l'intermédiaire de l'entrée de validation de sortie (OE) à un émetteur (4) et à sa bascule (F₁, F₂...Fₙ) que si la sortie de la bascule (F₁, F₂...Fₙ) est de faible impédance.

8. Rideau lumineux (1) selon l'une des revendications 1 à 7, **caractérisé en ce qu'**un émetteur (4) est adressé lorsque la sortie de la bascule associée (F₁, F₂...Fₙ) est commutée sur haut, en particulier plusieurs émetteurs (4) étant adressables simultanément.

9. Rideau lumineux (1) selon l'une des revendications 1 à 8, **caractérisé en ce que** les signaux de modulation (m₁, m₂ ...mₙ) pour les différents émetteurs (4) sont au moins partiellement différents, les impulsions lumineuses ayant notamment des identificateurs dépendant des signaux de modulation (m₁, m₂ ...mₙ).

10. Rideau lumineux (1) selon l'une des revendications 1 à 8, **caractérisé en ce que** les signaux de modulation (X₂', ...Xₙ') formant les signaux de commande sont générés par un front d'un signal d'horloge de la bascule respective (F₁, F₂...Fₙ), et/ou **en ce que** les signaux de modulation (X₂', ...Xₙ') formant les signaux de commande sont amenés à une entrée (D) de l'autre bascule (F₁, F₂...Fₙ).

11. Rideau lumineux (1) selon l'une des revendications 1 à 8, **caractérisé en ce que** des moyens sont prévus pour une régulation de courant des émetteurs (4), en particulier des moyens étant prévus pour mesurer les courants circulant à travers les diodes électroluminescentes (L₁, L₂...Lₙ) formant les émetteurs (4), et **en ce que** la régulation de courant est effectuée en fonction des courants ainsi mesurés.
